# EUROPÄISCHE PATENTSCHRIFT

(11) **EP 3 732 444 B1**
(45) Veröffentlichungstag und Bekanntmachung des Hinweises auf die Patenterteilung: **27.03.2024**
(21) Anmeldenummer: 18825591.3
(22) Anmeldetag: 10.12.2018
(51) Int. Cl.: G01F 1/32

(54) **DURCHFLUSSMESSGERÄT NACH DEM WIRBELZÄHLERPRINZIP UND MESSROHR DAFÜR**
FLOW METER DEVICE ACCORDING TO THE VORTEX MEASURING PRINCIPLE AND MEASURING TUBE FOR SAME
DÉBITMÈTRE À EFFET VORTEX ET TUBE DE MESURE ASSOCIÉ

(30) Priorität: 29.12.2017 DE 102017012066
(43) Veröffentlichungstag der Anmeldung: 04.11.2020
(73) Patentinhaber: Endress + Hauser Flowtec AG, 4153 Reinach (CH)
(72) Erfinder: HÖCKER, Rainer, 79761 Waldshut (DE); LAIS, Christian, 4142 Münchenstein (CH)
(74) Vertreter: Hahn, Christian
(86) Internationale Anmeldenummer: PCT/EP2018/084192
(87) Internationale Veröffentlichungsnummer: WO 2019/129479

(56) Entgegenhaltungen:
- CA-A1- 2 985 283
- US-A1- 2011 061 469
- US-A1- 2013 086 994
- US-A1- 2015 276 446

## Beschreibung

Die vorliegende Erfindung betrifft ein Durchflussmessgerät nach dem Wirbelzählerprinzip, und ein Messrohr dafür.

Ein gattungsgemäßes Durchflussmessgeräte ist beispielsweise im Durchfluss-Handbuch, 4. Auflage 2003, ISBN 3-9520220-3-9, S. 103 ff. beschrieben. Gattungsgemäße Durchflussmessgeräte beruhen darauf, dass Wirbel sich alternierend von beiden Seiten eines umströmten Staukörpers in einer Rohrleitung ablösen und eine so genannte Kärmänsche Wirbelstraße bilden, wobei die Wirbel zu periodischen Druckschwankungen führen, die mit einem Wirbeldetektor zu erfassen sind. Die Ablösefrequenz der Wirbel ist für eine konkrete Messanordnung im Wesentlichen proportional zur Durchflussgeschwindigkeit und zur Strouhalzahl, einer dimensionslosen Kennzahl. Durch Ermitteln der Wirbelfrequenz kann also in einfacher Weise die Durchflussgeschwindigkeit bzw. die Volumendurchflussrate ermittelt werden.

Die Veröffentlichung CA 2 985 283 A1 offenbart ein Durchflussmessgerät nach dem Differenzdruckmessprinzip mit einer beweglichen Hülse zur Querschnittsverengung eines Messrohrs.

Die Veröffentlichung US 2011 0061 469 A1 offenbart ein Durchflussmessgerät nach dem Wirbelzählerprinzip, wobei mehrere Messkanäle mit unterschiedlichen Strömungsquerschnitten vorgesehen sind. Damit lassen sich bei gleichem Volumendurchfluss unterschiedliche Strömungsgeschwindigkeiten - und damit Wirbelfrequenzen erzeugen.

Bedingt durch das Messprinzip kommt es an dem Staukörper zu einem Druckverlust, der im ungünstigen Fall zur Unterschreitung des Dampfdrucks eines flüssigen Mediums im Bereich des Wirbeldetektors führen kann. In diesem Fall ist eine zuverlässige Messung des Durchflusses nicht mehr möglich. Es ist daher die Aufgabe der vorliegenden Erfindung, hier Abhilfe zu schaffen. Die Aufgabe wird erfindungsgemäß gelöst durch das Messrohr gemäß dem unabhängigen Patentanspruch 1 und das Durchflussmessgerät gemäß dem abhängingen Patentanspruch 5.

Das erfindungsgemäße Messrohr zum Führen eines Fluids für ein Durchflussmessgerät nach dem Wirbelzählerprinzip weist eine einlaufseitige Öffnung in einer einlaufseitigen Stirnfläche des Durchflussmessgerätes und eine auslaufseitige Öffnung in einer auslaufseitigen Stirnfläche des Messgerätes aufweist, zwischen denen sich das Messrohr in axialer Richtung erstreckt;
einen Staukörper, der in dem Messrohr angeordnet ist, wobei der Staukörper dazu dient, eine Karmansche Wirbelstraße mit durchflussabhängiger Wirbelfrequenz zu verursachen, wenn das Messrohr von einem Fluid durchströmt wird;
mindestens einen Wirbeldetektor zum Erfassen von Wirbeln der Wirbelstraße und zum Bereitstellen von wirbelabhängigen Signalen;
wobei das Durchflussmessgerät axial beabstanded zum Wirbeldetektor zwischen dem Wirbeldetektor und der auslaufseitigen Stirnfläche des Durchflussmessgerätes eine Drossel aufweist, welche den Strömungsquerschnitt des Messrohrs ringförmig verengt, wobei das Messrohr zwischen dem Wirbeldetektor und der Drossel an einer ersten axialen Position einen ersten Durchmesser aufweist, wobei die Drossel an einer zweiten axialen Position einen zweiten Durchmesser aufweist, der um mindestens ein Zehntel kleiner ist als der erste Durchmesser, wobei ein Quotient gebildet aus der Differenz zwischen dem ersten Durchmesser und dem zweiten Durchmesser einerseits sowie der Differenz zwischen der ersten axialen Position und der zweiten axialen Position nicht kleiner ist als zwei, und wobei ein Durchmesserübergang zwischen dem ersten Durchmesser und dem zweiten Durchmesser als Sprung gestaltet ist.

In einer Weiterbildung der Erfindung weist die Drossel einen Strömungswiderstand auf, der nicht weniger als 50%, beispielsweise nicht weniger als 75%, weiter beispielsweise weniger als 90%, insbesondere nicht weniger als 95% des Strömungswiderstands des Durchflussmessgerätes zwischen der einlaufseitigen Stirnfläche und dem Wirbeldetektor beträgt.

In einer Weiterbildung der Erfindung weist die Drossel eine minimale Strömungsquerschnittsfläche auf, die nicht mehr als das Anderthalbfache, beispielsweise nicht mehr als das Eineinviertelfache und insbesondere nicht mehr als das Eineinzehntelfache der minimalen Strömungsquerschnittsfläche im Bereich des Staukörpers beträgt.

In einer Weiterbildung der Erfindung ist die Drossel axial beabstandet zu dem Wirbeldetektor, wobei der der axiale Abstand beispielsweise nicht weniger als einen halben Durchmesser des Messrohrs zwischen dem Wirbeldetektor und der Drossel beträgt, insbesondere nicht weniger als einen Durchmesser.

Das Erfindungsgemäße Durchflussmessgerät umfasst ein erfindungsgemäßes Messrohr und eine Betriebs- und Auswertungsschaltung, welche dazu eingerichtet ist, anhand der Signale des Wirbeldetektors eine Wirbelfrequenz und in Abhängigkeit der Wirbelfrequenz einen Durchflussmesswert zu bestimmen;

In einer Weiterbildung der Erfindung weist das Medium einen Dampfdruck auf, wobei der der statische Druck an der axialen Position auf halbem Abstand zwischen dem Staukörper und der Drossel nicht weniger als das Anderthalbfache des Dampfdrucks des Mediums beträgt.

In einer Weiterbildung der Erfindung beträgt die Differenz zwischen dem statischen Druck an der einlaufseitigen Stirnfläche und dem statischen Druck an der auslaufseitigen Stirnfläche beträgt nicht weniger als 20% des statischen Drucks an der auslaufseitigen Stirnfläche.

In einer Weiterbildung betrifft die Erfindung Messrohre und Durchflussmessgeräte für Abfüllanlagen für die Abfüllung von Getränken und fließfähigen Lebensmitteln.

Die Erfindung wird nun anhand der in den Zeichnungen dargestellten Ausführungsbeispiele erläutert. Es zeigt:
Fig. 1: Einen schematischen Längsschnitt durch ein erstes Ausführungsbeispiel eines erfindungsgemäßen Durchflussmessgeräts in Aufsicht;
Fig. 2: Einen schematischen Längsschnitt durch ein zweites Ausführungsbeispiel eines erfindungsgemäßen Durchflussmessgeräts in Seitenansicht; und
Fig. 3: Einen schematischen Längsschnitt durch ein drittes Ausführungsbeispiel eines erfindungsgemäßen Durchflussmessgeräts.

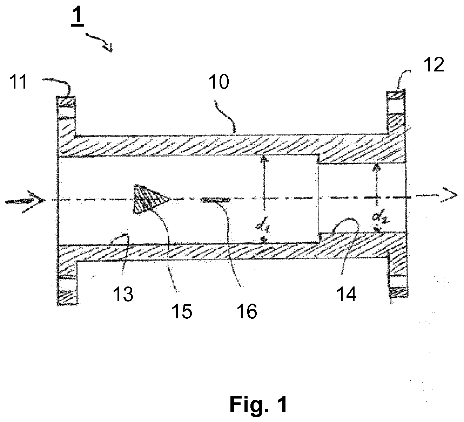

Das in Fig. 1 dargestellte erste Ausführungsbeispiel eines erfindungsgemäßen Durchflussmessgeräts 1 umfasst ein Messrohr 10 welches einlaufseitig einen ersten Flansch 11 und auslaufseitig einen zweiten Flansch 12 zum Einbau in eine Rohrleitung. Das Messrohr 10 weist einlaufseitig einen ersten ersten zylindrischen Abschnitt 13 mit einem ersten Innendurchmesser d1 und einen auslaufseitig einen zweiten zylindrischen Abschnitt 14 mit einem zweiten Innendurchmesser d2 auf, wobei der Übergang zwischen dem ersten zylindrischen Abschnitt und dem zweiten Abschnitt als radiale Stufe bzw. radialer Sprung gestaltet ist. Das Durchflussmessgerät 1 weist weiterhin einen im ersten zylindrischen Abschnitt 13 angeordneten Staukörper 15 auf, der sich senkrecht zur Längsachse des Messrohrs 10 durch das Messrohr erstreckt, um eine Kärmänsche Wirbelstraße ein einem das Messrohr 10 durchströmende Medium zu erzeugen. In Strömungsrichtung unterhalb des Staukörpers 15 weist das Durchflussmessgerät 1 einen Wirbeldetektor in Form einer Sensorfahne 16 auf, die von der Messrohrwand in das Messrohr hineinragt. Der Staukörper 15 und die Sensorfahne 16 sind spiegelsymmtrisch bezüglich einer gemeinsamen Messrohrlängsebene in welcher die Messrohrlängsachse verläuft. Die Sensorfahne 16 ist beispielsweise in einer Membran gelagert, und durch die Wirbel bedingten Auslenkungen der Sensorfahne werden beispielsweise mittels (hier nicht dargestellter) (piezo-)resistiven bzw. piezoelektrischen Sensoren oder kapazitiver Sensoren, insbesondere mit einem Differentialkondensator erfasst, wobei deren Signale von einer Auswertungseinheit verarbeitet werden um eine durchflussabhängige Wirbelfrequenz zu ermitteln und einen Durchflusswert zu berechnen. Geeignete Halterungen der Sensorfahne bzw. Signalauswertungen sind beispielsweise in den Offenlegungsschriften DE10 2013 013 476 A1, DE 10 2013 105 363 A1 und WO 1998 031 988 A1 beschrieben.

Die oben erwähnte Reduzierung des Durchmessers zwischen dem ersten zylindrischen Abschnitt 13 und dem zweiten zylindrischen Abschnitt 14 erzielt eine Drosselwirkung, die bedingt, dass in einem strömenden Medium der statische Druck im ersten zylindrischen Abschnitt 13 im Bereich der Sensorfahne 16 auf einem höheren Niveau gehalten wird als der statische Druck in einer auslaufseitig an das Messrohr anschließenden Rohrleitung welche den Durchmesser des ersten Rohrleitungsabschnitts aufweist. Auf diese Weise kann der statische Druck im Bereich der Sensorfahne 16 trotz eines durch das Messprinzip bedingten Druckabfalls am Staukörper 15 noch auf einem höheren Niveau gehalten werden, insbesondere oberhalb des Dampfdrucks einer Komponente eines im Rohr strömenden Mediums. Auf diese Weise wird das Ausgasen der Komponente bzw. Kavitation verhindert, wodurch eine Messung weiterhin möglich eine Beschädigung des Durchflussmessgerätes 1 vermieden wird, obwohl beispielsweise in einer auslaufseitig an das Messrohr 10 anschließenden Rohrleitung mit dem ersten Durchmesser bzw. dem Durchmesser einer einlaufseitigen Rohrleitung der Dampfdruck unterschritten würde. Der Durchmessersprung zwischen dem ersten zylindrischen Abschnitt und dem zweiten zylindrischen Abschnitt kann im Verhältnis zum Staukörper 15 so gestaltet sein, dass eine Differenz zwischen dem statischen Druck an der einlaufseitigen Stirnfläche und dem statischen Druck an einer axialen Position auf halbem Abstand zwischen dem Staukörper 15 und der Drossel 14 nicht mehr als zwei Drittel, insbesondere nicht mehr als die Hälfte der Differenz zwischen dem statischen Druck an der einlaufseitigen Stirnfläche und dem statischen Druck an der auslaufseitigen Stirnfläche hinter der Drossel beträgt, wenn dort wieder eine Rohrleitung mit dem ersten Durchmesser angeschlossen ist.

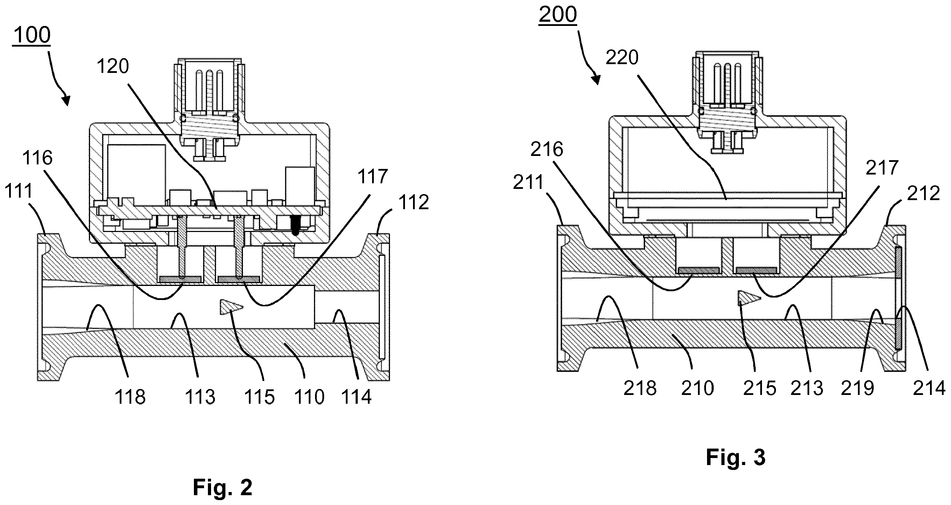

Das in Fig. 2 dargestellte, zweite Ausführungsbeispiel eines erfindungsgemä-ßen Durchflussmessgeräts 100 umfasst ein Messrohr 110 welches einlaufseitig einen ersten Flansch 111 und auslaufseitig einen zweiten Flansch 112 zum Einbau in eine Rohrleitung. Das Messrohr 110 weist einen zentralen ersten zylindrischen Abschnitt 113 mit einem ersten Innendurchmesser und auslaufseitig einen zweiten zylindrischen Abschnitt 114 mit einem zweiten Innendurchmesser auf, wobei der Übergang zwischen dem ersten zylindrischen Abschnitt und dem zweiten Abschnitt als radiale Stufe bzw. radialer Sprung gestaltet ist. Dem ersten zylindrischen Abschnitt 113 ist einlaufseitig noch ein konischer Abschnitt 118 vorgeschaltet, der den Durchmesser des Messrohrs stetig von einem Durchmesser einer einlaufseitig anzuschließenden Rohrleitung auf den Durchmesser des ersten zylindrischen Abschnitts 113 reduziert um die Strömungsgeschwindigkeit eines Mediums zu erhöhen. Diese Durchmesserreduktion sollte mit möglichst geringem Energieverlust für das strömende Medium erfolgen. Das Durchflussmessgerät 100 weist weiterhin einen im ersten zylindrischen Abschnitt 113 angeordneten Staukörper 115 auf, der sich senkrecht zur Längsachse des Messrohrs 110 durch das Messrohr erstreckt, um eine Kärmänsche Wirbelstraße ein einem das Messrohr 110 durchströmende Medium zu erzeugen. Das Messrohr 110 weist zwei membranartig verdünnte Wandbereiche auf, die als Membranen von Drucksensoren 116, 117 mit elektrischen Wandlern dienen, wobei die Membranen unterschiedlich von der Kármanschen Wirbelstraße beeinflusst werden. Die Drucksensoren 116, 117 bilden gemeinsam einen Wirbeldetektor, wobei eine Fluktuation der Differenz ihrer Sensorsignale von einer Betriebs- und Auswerteschaltung 120 ausgewertet wird, um eine Wirbelfrequenz und damit den Durchfluss zu bestimmen.

Die oben erwähnte Reduzierung des Durchmessers zwischen dem ersten zylindrischen Abschnitt 113 und dem zweiten zylindrischen Abschnitt 114 erzielt eine Drosselwirkung, die bedingt, dass in einem strömenden Medium der statische Druck im ersten zylindrischen Abschnitt 113 im Bereich der Membranen der Drucksensoren 116, 117 auf einem höheren Niveau gehalten wird als der statische Druck in einer auslaufseitig an das Messrohr anschließenden Rohrleitung, welche den Durchmesser des Messrohrs an der einlaufseitigen Stirnfläche aufweist. Auf diese Weise kann der statische Druck im Bereich der Membranen der Drucksensoren 116, 117 trotz eines durch das Messprinzip bedingten Druckabfalls am Staukörper 15 beispielsweise noch oberhalb des Dampfdrucks einer Komponente eines im Rohr strömenden Mediums gehalten werden.

Das in Fig. 3 dargestellte, dritte Ausführungsbeispiel eines erfindungsgemä-ßen Durchflussmessgeräts 200 umfasst ein Messrohr 210 welches einlaufseitig einen ersten Flansch 211 und auslaufseitig einen zweiten Flansch 212 zum Einbau in eine Rohrleitung. Das Messrohr 210 weist einen zentralen zylindrischen Abschnitt 213 mit einem ersten Innendurchmesser. Dem zylindrischen Abschnitt 213 ist einlaufseitig ein konischer Abschnitt 218 vorgeschaltet, der den Durchmesser des Messrohrs stetig von einem Durchmesser einer einlaufseitig anzuschließenden Rohrleitung auf den Durchmesser des ersten zylindrischen Abschnitts 213 reduziert, um die Geschwindigkeit des strömenden Mediums zu erhöhen. Dem zylindrischen Abschnitt 213 ist auslaufseitig noch ein konischer Abschnitt 219 nachgeschaltet, der den Durchmesser des Messrohrs 210 in Richtung der auslaufseitigen Stirnfläche stetig anwachsen lässt, wobei das Messrohr 210 an der auslaufseitigen Stirnfläche eine ringscheibenförmige Drossel 214 aufweist, deren Innendurchmesser gegenüber dem angrenzenden Durchmesser des konischen Abschnitts sprungartig reduziert ist, insbesondere auf den Durchmesser des zentralen zylindrischen Abschnitts 213.

Das Durchflussmessgerät 200 weist weiterhin einen im ersten zylindrischen Abschnitt 213 angeordneten Staukörper 215 auf, der sich senkrecht zur Längsachse des Messrohrs 210 durch das Messrohr erstreckt, um eine Kärmänsche Wirbelstraße ein einem das Messrohr 210 durchströmende Medium zu erzeugen. Das Messrohr 210 weist zwei membranartig verdünnte Wandbereiche auf, die als Membranen von Drucksensoren 216, 217 mit elektrischen Wandlern dienen, wobei die Membranen unterschiedlich von der Kármanschen Wirbelstraße beeinflusst werden. Die Drucksensoren 216, 217 bilden gemeinsam einen Wirbeldetektor, wobei eine Fluktuation der Differenz ihrer Sensorsignale von einer Betriebs- und Auswerteschaltung 120 ausgewertet wird, um eine Wirbelfrequenz und damit den Durchfluss zu bestimmen.

Der Durchmessersprung an der ringscheibenförmigen Drossel 214 bewirkt, dass in einem strömenden Medium der statische Druck im zentralen zylindrischen Abschnitt 213 im Bereich der Membranen der Drucksensoren auf einem höheren Niveau gehalten wird als der statische Druck in einer auslaufseitig an das Messrohr anschließenden Rohrleitung welche den Durchmesser an der einlaufseitigen Stirnfläche aufweist. Auf diese Weise kann der statische Druck am Ort der Drucksensoren trotz eines durch das Messprinzip bedingten Druckabfalls am Staukörper 215 noch auf einem höheren Niveau gehalten werden, insbesondere oberhalb des Dampfdrucks einer Komponente eines im Rohr strömenden Mediums.

## Patentansprüche

1. Messrohr (10; 110; 210) zum Führen eines Fluids, für ein Durchflussmessgerät (1; 100; 200) nach dem Wirbelzählerprinzip, wobei das Messrohr eine einlaufseitige Öffnung in einer einlaufseitigen Stirnfläche und eine auslaufseitige Öffnung in einer auslaufseitigen Stirnfläche aufweist, zwischen denen sich das Messrohr in axialer Richtung erstreckt;
einen Staukörper (15; 115; 215), der in dem Messrohr (10; 110; 210) angeordnet ist, wobei der Staukörper dazu dient, eine Kärmänsche Wirbelstraße mit durchflussabhängiger Wirbelfrequenz zu verursachen, wenn das Messrohr von einem Fluid durchströmt wird;
mindestens einen Wirbeldetektor (16; 116, 117; 216, 217) zum Erfassen von Wirbeln der Wirbelstraße und zum Bereitstellen von wirbelabhängigen Signalen;
wobei das Messrohr (10; 110; 210) axial beabstandet zum Wirbeldetektor zwischen dem Wirbeldetektor (16; 116, 117; 216, 217) und der auslaufseitigen Stirnfläche eine Drossel (14; 114; 214) aufweist, welche den Strömungsquerschnitt des Messrohrs ringförmig verengt (10; 110; 210),
wobei
das Messrohr zwischen dem Wirbeldetektor und der Drossel an einer ersten axialen Position einen ersten Durchmesser (d1) aufweist, wobei die Drossel an einer zweiten axialen Position einen zweiten Durchmesser (d2) aufweist, der um mindestens ein Zehntel kleiner ist als der erste Durchmesser, wobei ein Quotient gebildet aus der Differenz zwischen dem ersten Durchmesser und dem zweiten Durchmesser einerseits sowie der Differenz zwischen der ersten axialen Position und der zweiten axialen Position nicht kleiner ist als zwei, und
wobei ein Durchmesserübergang zwischen dem ersten Durchmesser (d1) und dem zweiten Durchmesser (d2) sprungartig ist.

2. Messrohr (10) nach Anspruch 1 wobei die Drossel einen Strömungswiderstand aufweist der nicht weniger als 50%, beispielsweise nicht weniger als 75%, weiter beispielsweise weniger als 90%, insbesondere nicht weniger als 95% des Strömungswiderstands des Messrohrs zwischen der einlaufseitigen Stirnfläche und dem Wirbeldetektor beträgt.

3. Messrohr (10) nach Anspruch 1 oder 2 wobei die Drossel (14) eine minimale Strömungsquerschnittsfläche aufweist, die nicht mehr als das Anderthalbfache, beispielsweise nicht mehr als das Eineinviertelfache und insbesondere nicht mehr als das Eineinzehntelfache der minimalen Strömungsquerschnittsfläche im Bereich des Staukörpers beträgt.

4. Messrohr (10) nach einem der vorhergehenden Ansprüche, wobei die Drossel (14) axial beabstandet ist zu dem Wirbeldetektor (16), wobei der der axiale Abstand beispielsweise nicht weniger als einen halben Durchmesser (d1) des Messrohrs zwischen dem Wirbeldetektor und der Drossel beträgt, insbesondere nicht weniger als einen Durchmesser (d1).

5. Durchflussmessgerät (100) nach dem Wirbelzählerprinzip, umfassend: ein Messrohr (10) nach einem der vorhergehenden Ansprüche und
eine Auswertungseinheit, welche dazu eingerichtet ist, anhand der Signale des Wirbeldetektors eine Wirbelfrequenz und in Abhängigkeit der Wirbelfrequenz einen Durchflussmesswert zu bestimmen.

## Claims

1. A measuring tube (10; 110; 210) for conducting a fluid, for a flowmeter (1; 100; 200) according to the vortex meter principle, wherein the measuring tube has an inlet-side opening in an inlet-side end face and an outlet-side opening in an outlet-side end face, between which the measuring tube extends in an axial direction;
a damming body (15; 115; 215), which is arranged in the measuring tube (10; 110; 210), wherein the damming body serves to cause a Kármán vortex street with a flow-dependent vortex shedding frequency when a fluid is flowing through the measuring tube;
at least one vortex detector (16; 116, 117; 216, 217) for detecting vortices in the vortex street and for providing vortex-dependent signals;
wherein the measuring tube (10; 110; 210), spaced axially apart from the vortex detector, has a throttle valve (14; 114; 214) between the vortex detector (16; 116, 117; 216, 217) and the outlet-side end face, which circularly constricts the flow cross-section of the measuring tube (10; 110; 210),
wherein the measuring tube between the vortex detector and the throttle valve has a first diameter (d1) at a first axial position, wherein the throttle valve has a second diameter (d2) at a second axial position, which is smaller than the first diameter by at least one tenth, wherein a quotient formed from the difference between the first diameter and the second diameter, on the one hand, and the difference between the first axial position and the second axial position, on the other hand, is not less than two, and wherein a diameter transition between the first diameter (d1) and the second diameter (d2) is extreme.

2. The measuring tube (10) as claimed in claim 1, wherein the throttle valve has a flow resistance that is not less than 50%, for example not less than 75%, additionally for example not less than 90%, in particular not less than 95%, of the flow resistance of the measuring tube between the inlet-side end face and the vortex detector.

3. The measuring tube (10) as claimed in claim 1 or 2, wherein the throttle valve (14) has a minimum flow cross-sectional area which is not more than one and a half, for example not more than one and a quarter, and in particular not more than one and a tenth, of the minimum flow cross-sectional area in the area of the damming body.

4. The measuring tube (10) as claimed in one of the preceding claims, wherein the throttle valve (14) is axially spaced apart from the vortex detector (16), wherein the axial distance is, for example, not less than half the diameter (d1) of the measuring tube between the vortex detector and the throttle valve, in particular not less than the diameter (d1).

5. A flowmeter (100) according to the vortex meter principle, comprising: A measuring tube (10) as claimed in one of the preceding claims and an evaluation unit which is configured to determine a vortex shedding frequency based on the signals from the vortex detector and a measured flow value depending on the vortex shedding frequency.

## Revendications

1. Tube de mesure (10 ; 110 ; 210) destiné à guider un produit, lequel tube est conçu pour un débitmètre (1 ; 100 ; 200) selon le principe du débitmètre vortex, le tube de mesure présentant une ouverture côté entrée dans une surface frontale côté entrée et une ouverture côté sortie dans une surface frontale côté sortie, ouvertures entre lesquelles le tube de mesure s'étend dans la direction axiale ;
un corps de retenue (15 ; 115 ; 215) étant disposé dans le tube de mesure (10 ; 110 ; 210), le corps de retenue servant à provoquer une allée de tourbillons selon Karman avec une fréquence vortex dépendant du débit lorsque le tube de mesure est parcouru par un produit ;
au moins un détecteur vortex (16 ; 116, 117 ; 216, 217) étant destiné à détecter les tourbillons de l'allée de tourbillons et pour fournir des signaux dépendant des tourbillons ;
le tube de mesure (10 ; 110 ; 210) présentant, à distance axiale du détecteur de vortex, entre le détecteur de vortex (16 ; 116, 117 ; 216, 217) et la surface frontale côté sortie, un étranglement (14 ; 114 ; 214), lequel rétrécit en forme d'anneau la section transversale d'écoulement du tube de mesure (10 ; 110 ; 210),
le tube de mesure entre le détecteur de vortex et l'étranglement présentant un premier diamètre (d1) à une première position axiale, l'étranglement présentant un deuxième diamètre (d2) à une deuxième position axiale, lequel deuxième diamètre est plus petit d'au moins un dixième que le premier diamètre, un quotient formé, d'une part, par la différence entre le premier diamètre et le deuxième diamètre et, d'autre part, par la différence entre la première position axiale et la deuxième position axiale, n'étant pas inférieur à deux, et
une transition de diamètre entre le premier diamètre (d1) et le deuxième diamètre (d2) étant brusque.

2. Tube de mesure (10) selon la revendication 1, pour lequel l'étranglement présente une résistance à l'écoulement qui n'est pas inférieure à 50 %, par exemple pas inférieure à 75 %, en outre par exemple pas inférieure à 90 %, notamment pas inférieure à 95 %.

3. Tube de mesure (10) selon la revendication 1 ou 2, pour lequel l'étranglement (14) présente une surface minimale de section transversale d'écoulement qui n'est pas supérieure à une fois et demie, par exemple pas supérieure à une fois et quart et notamment pas supérieure à un dixième de fois la surface minimale de section transversale d'écoulement dans la zone du corps de retenue.

4. Tube de mesure (10) selon l'une des revendications précédentes, pour lequel l'étranglement (14) est espacé axialement du détecteur de vortex (16), la distance axiale n'étant par exemple pas inférieure à un demi-diamètre (d1) du tube de mesure entre le détecteur de tourbillon et l'étranglement, notamment pas inférieure à un diamètre (d1).

5. Débitmètre (100) selon le principe d'un débitmètre vortex, lequel débitmètre comprend :
un tube de mesure (10) selon l'une des revendications précédentes et
une unité d'évaluation, laquelle est conçue pour déterminer, à l'aide des signaux du détecteur de vortex, une fréquence vortex et, en fonction de la fréquence vortex, une valeur mesurée de débit.
